# EUROPEAN PATENT APPLICATION

(11) **EP 1 973 288 A1**
(43) Date of publication of application: **24.09.2008**
(21) Application number: 06840753.5
(22) Date of filing: 30.12.2006
(51) Int. Cl.: H04L 29/02, H04L 12/44, H04B 10/20

(54) **A NETWORK INTERCONNECTION SYSTEM AND METHOD WITH SEPARATED CONTROL AND BEARING**

(30) Priority: 31.12.2005 CN 200610032612
(71) Applicant: Huawei Technologies Co., Ltd., Longgang District, Shenzhen Guangdong 518129 (CN)
(72) Inventor: ZHENG, Ruobin, Guangdong 518129 (CN)
(74) Representative: Karlsson, Leif Karl Gunnar
(86) International application number: PCT/CN2006/003723
(87) International publication number: WO 2007/076711

(57) **Abstract**

A network interconnection system and method with separated controlling and bearing is presented. The system includes a radio access network (RAN) and a corresponding core network (CN). The RAN includes a base station network element and a base station controller (BSC). The BSC is set to separate the controlling and the bearing and includes an RAN-Server and a radio gateway (RGW). The RAN-Server has controlling plane functions of a radio network controller (RNC) and a handover controlling function between the wired access and the radio access for supporting the handover controlling between the wired access and radio access. The RGW has the user plane functions of the RNC and has a multi-to-multi connection relationship with the base station network element. The system of the present invention reuses the standard In or Iur intertace as far as possible, implements the smooth evolution of the current UTRAN architecture, simplifies the design of each entity, and brings benefit to the networking by separating the control plane and the user plane and then being coupled tightly or loosely to the OAM network.

## Description

The present application claims the benefit of Chinese patent application Serial No. 200610032612.4, filed on December 31, 2005 to China patent office and entitled "Network Interconnection System and Method with Separated Controlling and Bearing", content of which is incorporated in this application by reference.

### Field of the Invention

The present invention relates to the field of communication technology, and more particularly to a network interconnection system and method with separated controlling and bearing.

### Background of the Invention

Due to high access bandwidth, an optical access network (OAN) is capable of performing Triple Play, i.e., the service of simultaneously transporting voice, data, and multimedia video better. The OAN mainly employs a passive optical network (PON) technology which includes two main stream technologies comparatively mature now, namely, Ethernet passive optical network (EPON) and gigabit passive optical network (GPON).

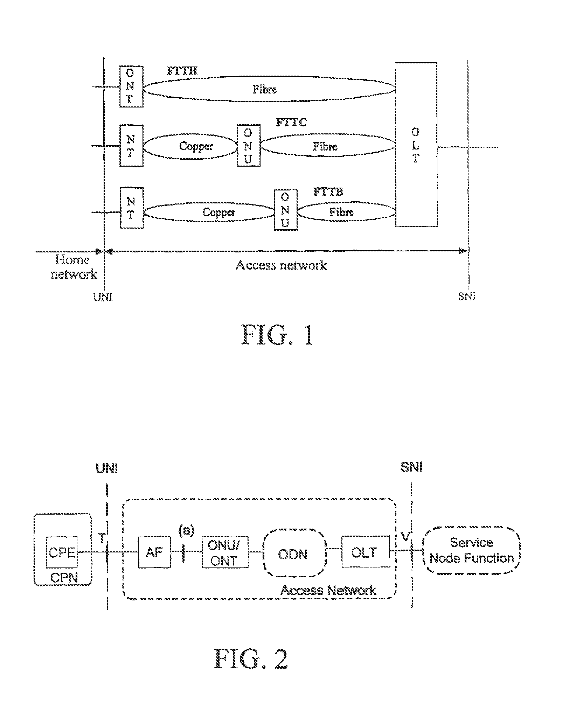

A main network architecture of the FTTx network of the OAN is shown in FIG. 1, while a specific reference architecture is shown in FIG 2. The entire reference architecture of the OAN includes a customer premises network (CPN), an access network, and a service node function. In the access network, an adapting function (AF) is an optional device, which mainly provides an inter-conversion between an optical network unit or optical network terminal (ONU or ONT) interface and a user network interface (UNI). The AF may also be built in the ONU. In this way, a reference point (a) may be omitted.

The AF may also be placed behind an optical line termination (OLT) to perform inter-conversion between an OLT interface and a service node interface (SNI). The AF may be regarded not only as the function of the CPN but also the function of the access network.

Main network elements of the CPN and the access network of the OAN include an OLT, an optical distribution network (ODN), an ONU or ONT, and an AF. T is a reference point for the UNI interface, and V is a reference point for the SNI interface. The OLT provides a network interface for the ODN, and is connected to one or more ODNs. The ODN provides a transportation means for the OLT and the ONU. The ONU provides a user-side interface for the OAN, and is connected to the ODN.

A customer premises equipment (CPE) is connected to the AF via the UNI interface (for example, via a DSL line). The AF converts a message format from the UNI interface format into the a interface (for example, an Ethernet link) format of message that may be connected to the ONU. The ONU then converts the message into a format of message that may be transmitted on the ODN, for example, EPON encapsulation, and GPON generic framing encapsulation. Finally, the OLT converts the message into a message in the format of the SNI interface (for example, the Ethernet link) for accessing a service node (SN).

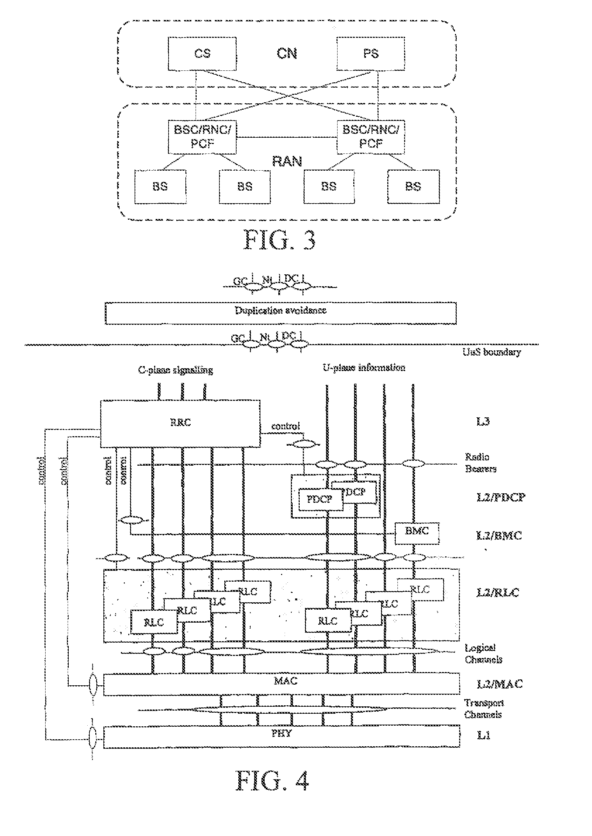

3G or 2G communication systems employ a similar structure including a radio access network (RAN) and a core network (CN). The RAN is adapted to process all radio-related functions, while the CN is adapted to process all voice calls and data connections within the radio communication system, and implement the switching and routing function with an external network. The CN is logically divided into a circuit switched domain (CS) and a packet switched domain (PS). An RAN, a CN, and a mobile station (MS) together constitute an entire 3G/2G radio communication system, and a reference architecture of the system thereof is as shown in FIG 3.

A base station (BS) is referred to as a base transceiver station (BTS) in GSM or GPRS or CDMA or CDMA2000, and is referred to as a Node B in WCDMA or TD-SCDMA. A base station controller (BSC) is referred to as a radio network controller (RNC) in WCDMA. In CDMA2000, a packet controlling function (PCF), located between the BSC and a packet data serving node (PDSN) and adapted to support the packet data service, may be placed together with the BSC or placed alone as a portion of the RAN.

For the WCDMA, the UTRAN uses the Iu series interfaces, including the Iu, Iur, and Iub interfaces. These interfaces are divided according to the general protocol model. The protocol stack of these interfaces consists of a corresponding radio network layer (RNL) and transport network layer (TNL). The Iu interface is an interface connecting the UTRAN and the CN, and has an open standard interface with a radio access network application part (RANAP) as its controlling plane protocol and a GTP protocol as its user plane protocol. The Iur interface is an interface connecting the RNCs, dedicated to the UMTS system, and adapted to perform mobile management of the MS in the RAN. For example, if a soft handover is performed between different RNCs, all data of the MS is transmitted from the operating RNC to a candidate RNC via the Iur interface.

The Iur is an open standard interface with a radio network subsystem application part (RNSAP) as its controlling plane protocol and an Iur FP as its user plane protocol. The Iub interface is an interface connecting the Node B and the RNC, and is also an open standard interface. The controlling plane protocol of the Iub interface is a NBAP and the user plane protocol thereof is an Iub FP.

The Node B is a base station (i.e., a radio transceiver) of the WCDMA system and includes a radio transceiver and a baseband processing unit, and is interconnected with the RNC via the standard Iub interface mainly for completing the processing of the Uu interface physical layer protocol. The functions of the Node B include spreading, modulation, channel coding, dispreading, demodulation, and channel decoding, as well as inter-conversion between the baseband signal and the radio frequency (RF) signal.

The RNC is adapted to control the radio resources of the UTRAN, for realizing the functions of connection establishment and disconnection, handover, macro diversity combination, radio resource management and control, etc. The functions particularly include:
(1) Performing broadcast distribution and system access controlling;
(2) Mobility management functions such as the handover and RNC relocation;
(3) Radio resource management and controlling functions such as the macro diversity combination, power controlling, and radio bearer distribution.

The radio interface protocol stack architecture between a user equipment (UE) and the UTRAN includes multiple protocols distributed and implemented in different nodes in the RAN. As shown in FIG. 4, a radio resource control (RRC) protocol is implemented in the UE and RNC for mainly implementing the RRC connection management, radio bearer management, paging or broadcasting, mobility management, and other functions. The RRC protocol is responsible for configuring parameter information of other protocol entities in the radio interface protocol stack.

The RLC protocol is implemented in the UE and RNC for mainly transporting the user data, and provides three data transmission modes respectively suitable for transmitting the service data with different QoS requirements. The MAC protocol is usually implemented in the UE and RNC, and is responsible for selecting a suitable transmission format for the user data and implementing the mapping from logical channel to transport channels. For some special types of channels, the MAC protocol is also implemented in the Node B.

the PDCP protocol is also implemented in the UE and RNC and has the following functions. Header compression and decompression of IP data stream are respectively performed in sending and receiving entities. For example, the TCP or IP and RTP or UDP or IP header compression method corresponds to a particular combination of network layer, transport layer, or upper layer protocols. As for the user data transmission, the PDCP-SDU sent from a non-access stratum is forwarded to the RLC layer, and the PDCP-SDU and the corresponding sequence number are forwarded to multiplex multiple different RBs to the same RLC entity if a lossless SRNS relocation function is supported.

The BMC has the functions of storing cell broadcasting information, monitoring traffic flow and requesting radio resources for the CBS, scheduling BMC information, sending BMC information to the UE, transmitting the cell broadcasting information to the high layer (the NAS), etc.

Currently, the RAN controlling plane and the user plane of the 3G or 2G radio communication networks are not separated and are formed as a centralized star topology structure. The user data and the signaling all pass through the RNC or BSC, which easily becomes a bottleneck to form a single point failure with inflexibility in networking and low expandability, thereby failing to fit the development of the future services. In addition, the interconnection between the 3G or 2G radio communication network and the OAN network belongs to a branch of fixed-mobile convergence (FMC) and is an emerging issue without any prior art.

### Summary of the Invention

Embodiments of the present invention provide a network interconnection system and method with separated controlling and bearing, which separates the controlling and bearing of a radio access network (RAN) and then is coupled tightly or loosely to an OAM network as a wireless extension of the OAM wired access.

In an embodiment of the present invention, a network interconnection system with separated controlling and bearing is provided. The system has a radio access network (RAN) and a core network (CN). The RAN includes a base station (BS), a radio access network server (RAN-Server), and a radio gateway (RGW).

The RAN-Server has controlling plane functions of a radio network controller (RNC) including the functions of radio resource controlling, cell-specific radio resource management, and handover controlling.

The RGW has user plane functions of the RNC including the media access controlling, radio link controlling, and packet data convergence protocol, and has a multi-to-multi connection relationship with the base station.

In an embodiment of the present invention, a network interconnection method with separated controlling and bearing is provided. An RNC is decomposed into an RAN-Server and a RGW to implement the separation of the controlling and bearing. The RAN-Server has controlling plane functions of a base station controller (BSC) and the handover controlling function between the wired access and radio access. The RGW has user plane functions of the BSC. The method includes the following steps.

A radio base station is interconnected with an optical access network (OAN) at a reference point a within the OAN via an adapting function (AF), and the RGW or wireless gateway (WGW) of a radio communication network is interconnected with an optical line termination (OLT) at a reference point v within the OAN, so as to implement an interconnection between the optical network and the radio communication network.

Preferably, the base station is connected to the AF entity via a reference point T of the OAN. The adapting function entity is connected to an optical network unit or optical network terminal (ONU or ONT) in the OAN via the reference point a in the optical network.

The AF entity is integrated with the base station into one network element in the radio communication network. The network element is connected and disposed in the OAN via the reference point a, and connected to the ONU or ONT in the OAN.

In an embodiment of the present invention, another network interconnection method with separated controlling and bearing is provided, which includes the following steps.

A base station of a radio communication network is interconnected with an OAN at an optical distribution network (ODN) via an ONU or ONT, and an RGW or WGW of the radio communication network is interconnected with an OLT at a reference point v, so as to implement an interconnection between the optical network and the radio communication network.

Preferably, the base station is directly connected to the ONU or ONT via a reference point a of the OAN.

The ONU or ONT is integrated with the base station into one network element in the radio communication network. The network element is interconnected with the OAN at the ODN.

The solutions provided in the embodiments of the present invention reuse the standard Iu or Iur interface as far as possible, implement the smooth evolution of the current UTRAN architecture, simplify the design of each entity, make the networking more flexible and expandable, and facilitate the networking by reassembling the functions of the radio network elements, separating the controlling plane and the user plane, and then being coupled tightly or loosely to the OAM network. The solutions are suitable for fixed radio, nomadic, portable, and mobile access applications, and provide an evolution path for the development of the radio network by the OAN network operators.

### BRIEF DESCRIPTION OF THE DRAWINGS

The present invention will become more fully understood from the detailed description given herein below for illustration only, and thus are not limitative to the present invention, in which:

FIG. 1 is a schematic view illustrating a basic network architecture of an optical access network in the prior art;

FIG. 2 is a schematic view illustrating a network reference architecture of the OAN in the prior art;

FIG. 3 is a schematic view illustrating a reference architecture of a 3G or 2G system in the prior art;

FIG. 4 is a schematic view illustrating a radio interface protocol stack architecture in the prior art;

FIG. 5 is a schematic view illustrating an enhanced mobile network architecture with separated controlling and bearing according to a first embodiment of the present invention;

FIG. 6 is a schematic view illustrating an enhanced mobile network interface protocol stack with separated controlling and bearing according to the first embodiment of the present invention;

FIG. 7 is a schematic view illustrating an enhanced mobile network architecture with separated controlling and bearing according to another embodiment of the present invention;

FIG. 8 is a schematic view illustrating an enhanced mobile network architecture with separated controlling and bearing according to a third embodiment of the present invention;

FIG. 9 is a schematic view illustrating an enhanced mobile network architecture with separated controlling and bearing according to a fourth embodiment of the present invention;

FIG. 10 is a schematic view illustrating an interconnection between as optical access network and a radio network according to an embodiment of the present invention;

FIG. 11 is a schematic view illustrating an interconnection between the optical access network and the radio network according to an embodiment of the present invention;

FIG. 12 is a schematic structural view illustrating a separation of a BS integrated network element and an AF network element on a user plane according to an embodiment of the present invention;

FIG. 13 is a schematic structural view illustrating an integration of BS and AF network elements on a user plane according to an embodiment of the present invention;

FIG. 14 is a schematic view illustrating an integration of a BS and AF network elements on a user plane according to an embodiment of the present invention;

FIG. 15 is a schematic structural view illustrating a separation of a BS integrated network element and an AF network element and an integration of an OLT and an RGW on a controlling plane according to an embodiment of the present invention;

FIG. 16 is a schematic structural view illustrating an integration of BS and AF network elements and an integration of an OLT and an RGW on a controlling plane according to an embodiment of the present invention;

FIG. 17 is a schematic structural view illustrating an integration of BS and AF network elements and an integration of an OLT and a WGW on a controlling plane according to an embodiment of the present invention;

FIG. 18 is a schematic structural view illustrating an interconnection between an OAN and a radio network according to an embodiment of the present invention;

FIG. 19 is a schematic structural view illustrating an interconnection between an OAN and a radio network according to an embodiment of the present invention;

FIG. 20 is a schematic view illustrating an integration of BS and ONU or ONT network elements on a user plane according to an embodiment of the present invention; and

FIG. 21 is a schematic view illustrating an integration of BS and ONU or ONT network elements and an integration of RGW and OLT network elements on a network interconnection controlling plane according to an embodiment of the present invention.

### DETAILED DESCRIPTION OF THE EMBODIMENTS

Specific embodiments of the present invention are described below by reference to the accompanying drawings.

In the network interconnection implementation method with separated controlling and bearing of the present invention, first, function decomposition is performed on unit entities of a radio access network (RAN) and the following functional units are defined, namely, a base station (BS), a radio access network server (RAN-Server), and a radio gateway (RGW). The functions of the RAN-Server and RGW are classified as follows.

For the RAN of the WCDMA or GPRS or TD-SCDMA network, the function decomposition of the BS, RAN-Server, and RGW is shown in Table 1.

**Table 1 Function Decomposition of BS and RGW**

| Functions | BS | RAN -Server | RGW |
|---|---|---|---|
| Physical layer (PHY) | mandatory | | |
| Media access control (MAC) | | | mandatory |
| Radio link control (RLC) | | | mandatory |
| Broadcast or multicast control (BMC) | | optional | optional |
| Packet data convergence protocol (PDCP) | | | mandatory |
| Radio resource control (RRC) | | mandatory | |
| Multi-cell radio resource management (MC-RRM) | | optional | |
| Cell-specific radio resource management (CS-RRM) | | mandatory | |
| Broadcast Distribution | | optional | |
| Handover control (HO Control) | | mandatory | |
| Paging Control | | optional | |
| Access Control | | optional | |
| Intra-cell Control | | optional | |
| Inter-cell control | | optional | |
| Relocation Control | | optional | |
| QoS scheduling | | | Optional |
| RANAP message forwarding | | optional | |
| RNSAP message forwarding | | optional | |
| Adapting between CN or RNC network element of new architecture and conventional architecture | | | optional |
| Handover control between wired access and radio access | | optional | |

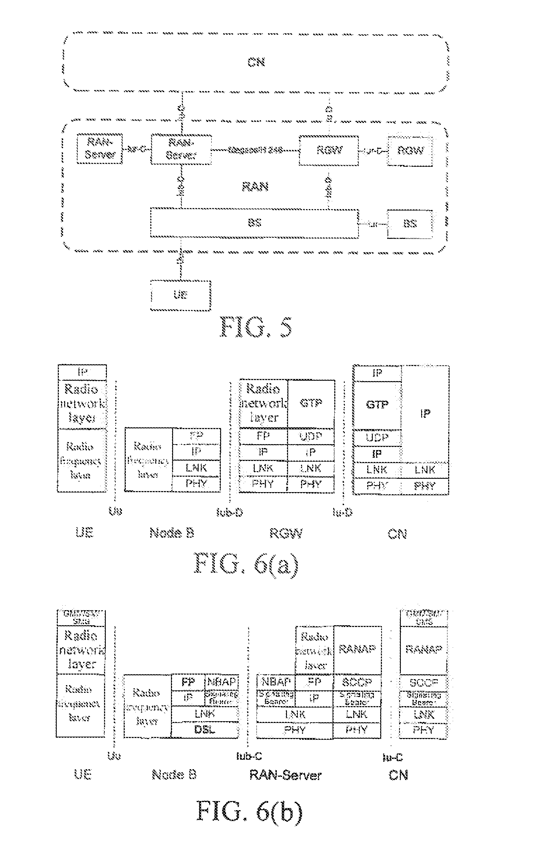

Accordingly, a new radio network architecture of the present invention is shown in FIG 5. An interface between a user equipment (UE) network element and a BS network element employs the original interface Uu between the UE and the UTRAN, while the Iub interface between the Node B and the RNC no longer exists. The interface Iub-D between the BS network element and the RGW employs the user plane of the original interface Iub between the RNC and the Node B. The interface Iub-C between the BS network element and the RAN-Server employs the controlling plane of the original interface Iub between the RNC and the Node B. The interface between the RAN-Server and the RGW employs the Megaco of IETF or H.248 of ITU-T or a brand-new protocol stack. The RAN-Server manages the RGW via the Megaco or H.248. The interface Iu-D between the RGW and the CN employs the user plane of the original interface Iu between the RNC and the SGSN. The interface Iu-C between the RAN-Server and the CN employs the controlling plane of the original interface Iu between the RNC and the SGSN. The controlling plane of the original Iur interface between the RNCs is employed between the RAN-Servers. The user plane of the original Iur interface between the RNCs is employed between the RGWs. An interface between the additionally added BS network elements employs the original Iur interface between the RNCs.

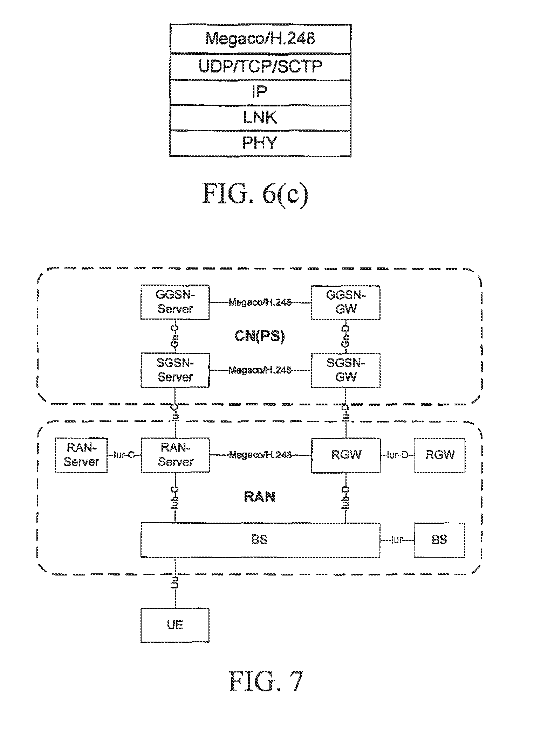

In an embodiment of the present invention, definition of an enhanced mobile network interface and a protocol stack thereof with downsizing radio interface of the system is shown in FIGs. 6(a)-6(c). FIG. 6(a) is a schematic view illustrating user plane of an enhanced mobile network with separated controlling and bearing. FIG. 6(b) is a schematic view illustrating controlling plane of an enhanced mobile network with separated controlling and bearing in the present invention. FIG 6(c) is a schematic view illustrating an IP-based Megaco or H.248 protocol stack in the present invention.

The system according to the present invention further performs function decomposition with separated controlling and bearing on the CN PS domain. One of the function decomposition methods is to define the following functional units, namely, a serving GPRS support node server (SGSN-Server), a serving GPRS support node gateway (SGSN-GW), a gateway GPRS support node server (GGSN-Server), and a gateway GPRS support node gateway (GGSN-GW). The SGSN-Server is provided with the original SGSN controlling plane functions and implements the mobility management, connection management, session management, and other SGSN controlling plane functions. The SGSN-GW is provided with the original SGSN user plane functions. The GGSN-Server is provided with the original GGSN controlling plane functions. The GGSN-GW is provided with the original GGSN user plane functions.

Accordingly, a new radio network architecture of the present invention is shown in FIG. 7. The RAN is the same as that in FIG 5. In the CN, the interface Iu-D between the SGSN-GW and the RGW employs the user plane of the original interface Iu between the RNC and the SGSN. The interface Iu-C between the SGSN-Server and the RAN-Server employs the controlling plane of the original interface Iu between the RNC and the SGSN. The interface Gn-D between the SGSN-GW and the GGSN-GW employs the user plane of the original interface Gn between the GGSN and the SGSN. The interface Gn-C between the SGSN-Server and the GGSN-Server employs the controlling plane of the original interface Gn between the GGSN and the SGSN. The interface between the SGSN-Server and the SGSN-GW employs the Megaco of IETF or H.248 of ITU-T or a new protocol stack. The SGSN-Server manages the SGSN-GW via the Megaco or H.248. The interface between the GGSN-Server and the GGSN-GW employs the Megaco of IETF or H.248 of ITU-T or a new protocol stack. The GGSN-Server manages the GGSN-GW via the Megaco or H.248.

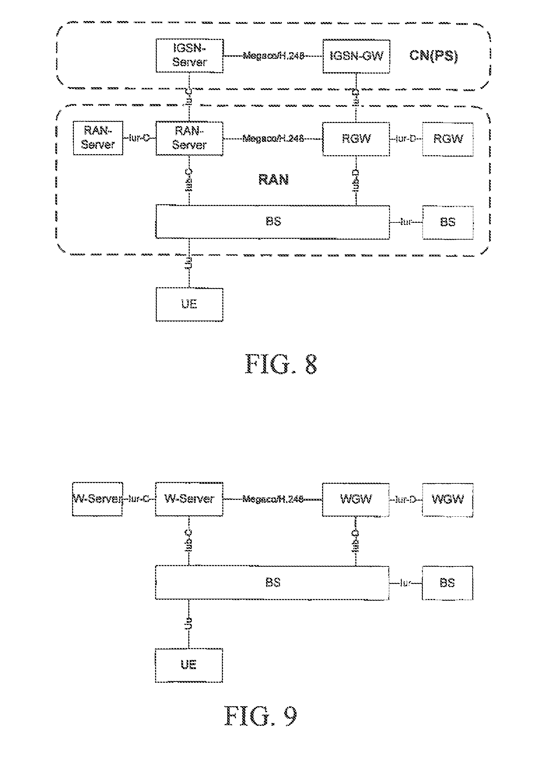

Another CN PS domain function decomposition method of the present invention is to define the following functional units, namely, an integrated GPRS support node server (IGSN-Server) and an integrated GPRS support node gateway (IGSN-GW). The IGSN-Server is provided with the controlling plane functions of the original GGSN and GGSN. The IGSN-GW is provided with the user plane functions of the original SGSN and GGSN. A corresponding radio network architecture thereto is shown in FIG. 8. The RAN is the same as that in FIG. 5. In the CN, the interface lu-D between the IGSN-GW and the RGW employs the user plane of the original interface Iu between the RNC and the SGSN. The interface Iu-C between the IGSN-Server and the RAN-Server employs the controlling plane of the original interface Iu between the RNC and the SGSN. The interface between the IGSN-Server and the IGSN-GW employs the Megaco of IETF or H.248 of ITU-T or a brand-new protocol stack. The IGSN-Server manages the IGSN-GW via the Megaco or H.248.

A fourth new radio network architecture of the present invention is shown in FIG 9. The RAN-Server and the IGSN-Server are integrated into one network element called a wireless server (W-Server) being provided with the original controlling plane functions of the RNC, SGSN, and GGSN. The RGW and the IGSN-GW are integrated into one network element called a wireless gateway (WGW) being provided with the original user plane functions of the RNC, SGSN, and GGSN. The interface Iub-D between the BS network element and the WGW employs the user plane of the original interface Iub between the RNC and the Node B. The interface Iub-C between the BS network element and the W-Server employs the controlling plane of the original interface Iub between the RNC and the Node B. The interface between the W-Server and the WGW employs the Megaco of IETF or H.248 of ITU-T or a brand-new protocol stack. The W-Server manages the WGW via the Megaco or H.248. The controlling plane of the original Iur interface between the RNCs is employed between the W-Servers. The user plane of the original Iur interface between the RNCs is employed between the WGWs. An interface between the additionally added BS network elements employs the original Iur interface between the RNCs.

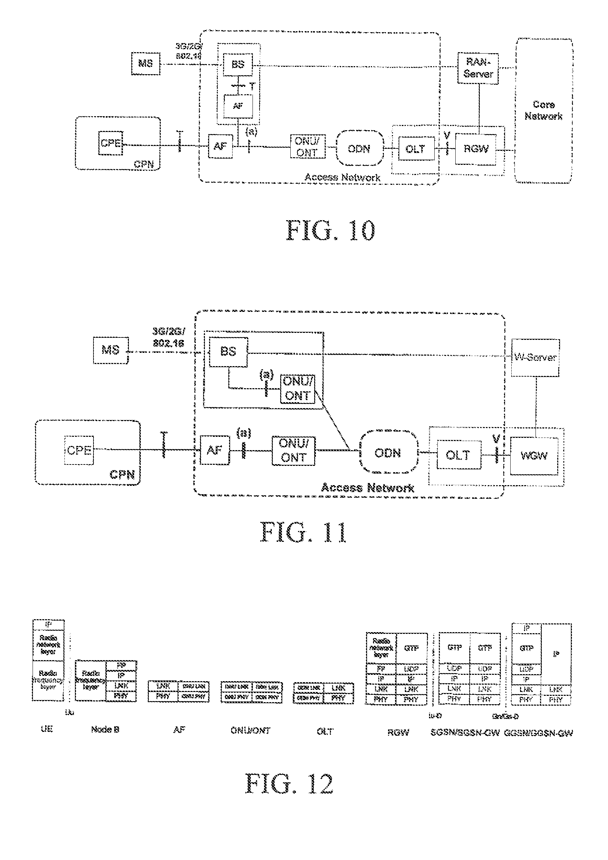

The embodiments of the methods of the present invention are described below in more detail. As shown in FIGs. 10 and 11, a BS of a 3G or 2G radio communication network is interconnected with an OAN at a reference point (a) within the OAN via an AF, and an RGW or WGW of the 3G or 2G radio communication network is interconnected with an OLT at a reference point v. Such solution may enable the resources set by the original OAN to be fully utilized in the construction of the 3G or 2G access network. For example, if the operator already has an FTTB or FTTC network, the 3G or 2G radio communication network device is set in the building to directly utilize the copper wire resources in the building and access the OAN network via an ONU, thereby reducing the additional wiring of the radio communication network and reducing the construction cost of the 3G or 2G access network. The solution is a tight coupling solution.

In this solution, the BS and AF network elements may be separated and interconnected at a reference point T, or integrated into one. The RGW or WGW may be integrated with the OLT network element into one.

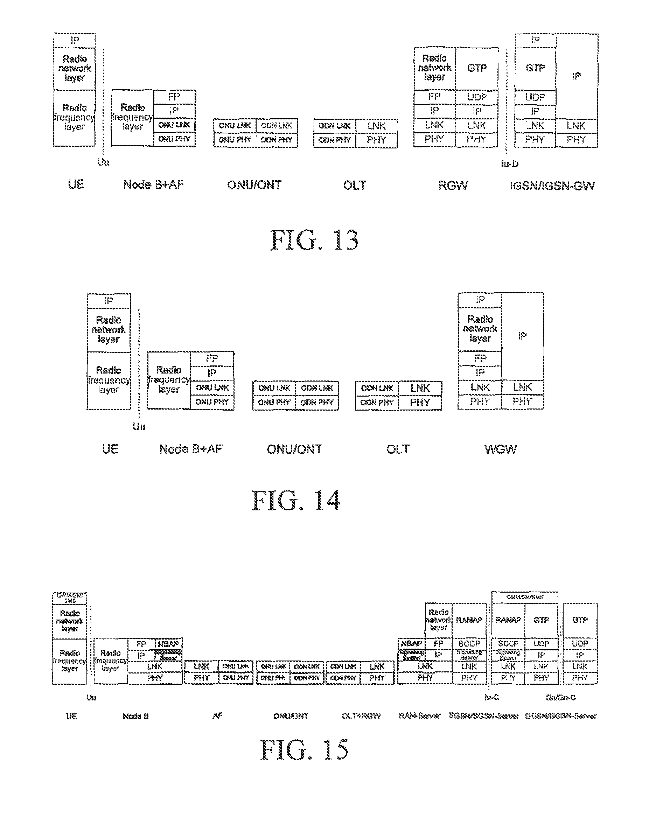

Taking WCDMA as an example, a user plane of the protocol stack under the path of UE->Node B->ONU->OLT->Core, Network is shown in FIGs, 12-14, and a controlling plane thereof is shown in FIGs. 15-17. The function decomposition of the BS, RAN-Server, and RGW is shown in Table 1. The Core Network includes the SGSN and the GGSN. The GGSN and the GGSN may also be integrated into a new network element IGSN. The Core Network may also be implemented according to the solution in FIGs. 7 and 8.

Based on the above protocol stack structure of the system in the present invention, the UE first establishes an RRC connection through a controlling plane protocol stack and begins establishing a radio access bearer (RAB) after negotiating with the CN in the data communication. The establishment of the RAB is accompanied with the establishment of a user plane bearer RB. Upon the successful establishment of the RAB, the user may transmit the data through the established user plane bearer. The PDCP compression or decompression function may be enabled or not. A signaling establishment process is a process that the UE establishes a signaling connection with the CN via the RNC after the RRC connection between the UE and the UTRAN is established successfully. The process is also referred to "NAS signaling establishment process" and adapted for the NAS information about signaling exchange between the UE and the CN, such as the authentication, service request, and connection establishment.

A transport process of the user data enabling the compression or decompression function by the system of the present invention is as fellows.

The Uplink: the application layer data of the UE is sent to a PDCP protocol of a radio network layer (RNL) after being encapsulated into an IP packet or PPP packet. The PDCP protocol compresses the header of the data packet and passes the compressed data to the RLC or MAC of the RNL. The RLC or MAC protocol adds an RLC or MAC header and sends the data packet to a radio frequency layer (RFL) after receiving and processing the data packet. The physical layer performs coding, modulation, and other operation on the received data packet and sends it to the UTRAN via the Uu interface.

The RFL of the BS in the UTRAN encapsulates the data into a frame of frame protocol (FP) after receiving the data, and sends the FP frame to the RGW via the Iub-D interface, The Iub-D interface FP between the Node B and the RGW may be directly borne on the OAN. A Layer 2 bridging technology (for example, Ethernet bridging) may be employed between the Node B and the RGW, that is, the AF, ONU or ONT, and OLT are all Layer 2 network elements. Or, a Layer 3 routing technology (for example, IP Layer 3 routing) is employed between the Node B and the RGW, that is, the AF, ONU or ONT, and OLT are, all Layer 3 network elements.

The Node B divides the FP or IP packet into LNK frames and then has them borne on the physical layer between the Node B and the AF to be sent to the AF. The AF converts the LNK frames into ONU LNK frames and then has them borne on the physical layer between the ONU or ONT and the AF to be sent to the ONU or ONT. The ONU or ONT converts ONU or ONT LNK frames into ODN LNK frames suitable for the optical transmission, then performs an electro-optic conversion to has them borne on the ODN physical layer, and sends them to the OLT via an optical fiber. The OLT PHY performs an optic-electro conversion to obtain the ODN LNK frames and then converts the ODN LNK frames into the LNK frames to be sent to the RGW for further processing. The RGW obtains RNL frames from the Iub-D interface FP and sends them to the MAC or RLC protocol of the RNL. The MAC or RLC protocol removes the protocol header in turn and sends the data to the PDCP protocol of the RNL after a reassembly and combination. The PDCP protocol decompresses the compressed data packet header to obtain a user packet, then performs the RNL and TNL processing of the Iu-D interface, and sends the data packet to a network element of the CN via a GTP tunnel.

In the CN, the SGSN or SGSN-GW performs a TNL and RNL processing of the Iu or Iu-D interface, receives the data from the GTP tunnel and then sends it to the GGSN or GGSN-GW via the Gn or Gn-D interface through the GTP tunnel. The data received by the GGSN or GGSN-GW from the GTP tunnel of the Gn or Gn-D interface is the IP packet or PPP packet of the UE. The GGSN or GGSN-GW then sends the data to an external network via a Go interface in the form of the IP packet or PPP protocol packet. Or, the IGSN or IGSN-GW performs the TNL and RNL processing of the Iu or Iu-D interface, The data received from the GTP tunnel is the IP packet or PPP packet of the UE. The IGSN or IGSN-GW then sends the data to the external network in the form of the IP packet or PPP protocol packet.

The downlink is similar to the uplink, only except that the PDCP protocol in the RGW is responsible for the compression of the header of the downlink data, and the PDCP protocol in the UE is responsible for the decompression of the header of the downlink data.

A transport process of the controlling plane signaling in the system of the present invention is as follows.

The uplink: the RRC of the UE encapsulates a GMM or SM or SMS message or a signaling message of this layer into a data packet, and passes the data packet to the RLC or MAC of the TNL. The RLC or MAC protocol adds an RLC or MAC header and sends the data packet to the radio frequency layer RFL after receiving and processing the data packet. The physical layer performs coding, modulation, and other operation on the received data packet and sends the data packet to the UTRAN via the Uu interface.

The RFL of the BS in the UTRAN encapsulates the data into an Iub-C interface RNL (such as the FP) frame after receiving the data, sends it to the RRC layer of the RAN-Server through the bearer of an lub-C interface TNL (such as the IP or LNK or PHY). The RNL (such as the FP or NBAP) and the TNL (such as the IP layer or signaling bearer (for example, the SCTP or IP)) of the Iub-C interface between the Node B and the RAN-Server may be directly borne on the OAN. A Layer 2 bridging technology (for example, the Ethernet bridging) may be employed between the Node B and the RAN-Server, that is, the AF, ONU or ONT, and OLT are all Layer 2 network elements. Or, a Layer 3 routing technology (for example, the IP Layer 3 routing) is employed between the Node B and the RAN-Server, that is, the AF, ONU or ONT, and OLT are all Layer 3 network elements.

The Node B divides the FP or IP or NBAP or SCTP or IP packet of the Iub-C interface into LNK frames and then has them borne on the physical layer between the Node B and the AF to be sent to the AF. The AF converts the LNK frames into ONU LNK frames and then has them borne on the physical layer between the ONU or ONT and the AF to be sent to the ONU or ONT. The ONU or ONT converts ONU or ONT LNK frames into ODN LNK frames suitable for the optical transmission, then performs an electro-optic conversion to have them borne on the ODN physical layer, and sends them to the OLT via an optical fiber. The OLT PHY performs an optic-electro conversion to obtain the ODN LNK frames and then converts the ODN LNK frames into the LNK frames to be sent to the RAN-Server for further processing. The RAN-Server obtains RNL frames of the Uu interface from the Iub-C interface FP and sends them to the MAC or RLC protocol of the RNL. The MAC or RLC protocol removes the protocol header in turn and sends the data to the RRC after a reassembly and combination. The RRC protocol decompresses the compressed data packet header to obtain a user packet, and then sends the data packet to a network element of the CN through the RNL and TNL processing of the Iu-C interface.

In the CN, the IGSN or SGSN or IGSN-Server or SGSN-Server performs a TNL and RNL processing of the Iu-C interface and obtains the GMM or SM or SMS message from the RANAP. Similarly, the UE receives a signaling message of the CN and an RRC signaling message of the access network through an opposite process.

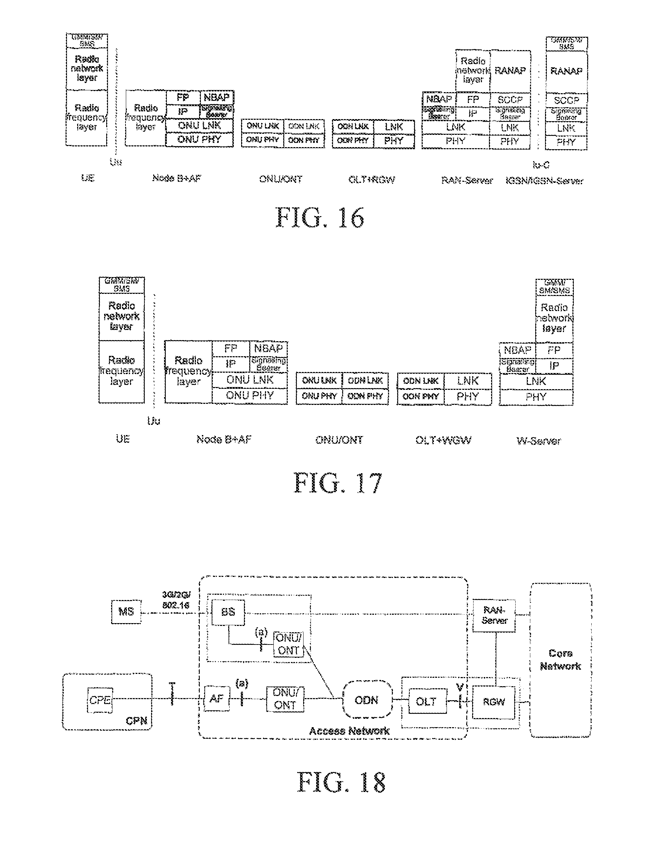

In another preferred embodiment of the present invention, as shown in FIGs. 18-19, a BS of a 3G or 2G radio communication network is interconnected with an OAN broadband network at an ODN, and an RGW or WGW of the 3G or 2G radio communication network is interconnected with an OLT at a reference point v. The solution is a loose coupling solution. The 3G or 2G radio communication network directly utilizes the optical network resources of the OAN. For example, if the operator already has an FTTH network, the WiMAX device is set in the building to directly access the ODN network. In such solution, the BS integrates the function of the ONU or ONT, and the RGW or WGW may be integrated with the OLT network element into one.

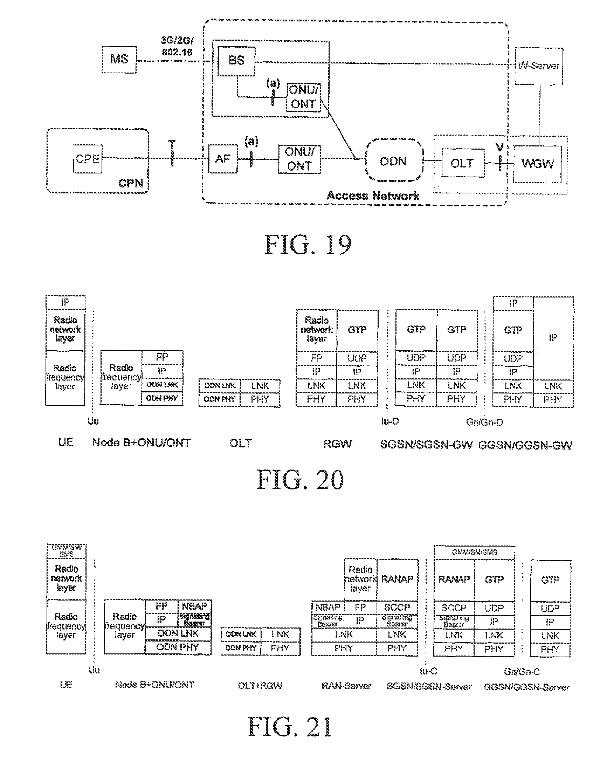

Taking WCDMA as an example, a user plane of the protocol stack under the path of UE->Node B->ONU->OLT->Core Network is shown in FIG 20, and a controlling plane thereof is shown in FIG 21. The function decomposition of the BS, RAN-Server, and RGW is shown in Table 1. The core network includes the SGSN and the GGSN. The SGSN and the GGSN may also be integrated into a new network element IGSN. The CN may also be implemented according to the solution in FIGs. 7 and 8.

A transport process of the user data enabling the compression or decompression function in the present invention includes the following:

The Uplink: the application layer data of the UE is sent to a PDCP protocol of an RNL after being encapsulated into an IP packet or PPP packet. The PDCP protocol compresses the header of the data packet and passes the compressed data to the RLC or MAC of the RNL. The RLC or MAC protocol adds an RLC or MAC header and sends the data packet to a radio frequency layer (RNL) after receiving and processing the data packet. The physical layer performs coding, modulation, and other operation on the received data packet and sends it to the UTRAN via the Uu interface. The RFL of the BS+ONU or ONT in the UTRAN encapsulates the data into a framing protocol (FP) frame after receiving the data and sends it to the RGW via the Iub-D interface.

The Iub-D interface framing protocol FP between the Node B and the RGW may be directly borne on the OAN. A Layer 2 bridging technology (for example, the Ethernet bridging) may be employed between the Node B and the RGW, that is, the OLT is a Layer 2 network element. Or, a Layer 3 routing technology (for example, the IP Layer 3 routing) is employed between the Node B and the RGW, that is, the OLT is a Layer 3 network element.

The BS+ONU or ONT divides the FP or IP packet into ODN LNK frames suitable for the optical transmission, then performs an electro-optic conversion to have them borne on the ODN physical layer, and sends them to the OLT via an optical fiber. The OLT PHY performs an optic-electro conversion to obtain the ODN LNK frames and then converts the ODN LNK frames into the LNK frames to be sent to the RGW for further processing. The RGW obtains RNL frames from the Iub-D interface FP and sends them to the MAC or RLC protocol of the RNL. The MAC or RLC protocol removes the protocol header in turn and sends the data to the PDCP protocol of the RNL after a reassembly and combination. The PDCP protocol decompresses the compressed data packet header to obtain a user packet, then performs the RNL and TNL processing of the Iu-D interface, and sends the data packet to a network element of the CN via a GTP tunnel.

In the CN, the SGSN or SGSN-GW performs a TNL and RNL processing of the Iu or Iu-D interface, receives the data from the GTP tunnel, and then sends it to the GGSN or GGSN-GW via the Gn or Gn-D interface through the GTP tunnel. The data received by the GGSN or GGSN-GW from the GTP tunnel of the Gn or Gn-D interface is the IP packet or PPP packet of the UE. The GGSN or GGSN-GW then sends the data to an external network via a Gi interface in the form of the IP packet or PPP protocol packet. Or, the IGSN or IGSN-GW performs the TNL and RNL processing of the Iu or Iu-D interface. The data received from the GTP tunnel is the IP packet or PPP packet of the UE. The IGSN or IGSN-GW then sends the data to the external network in the form of the IP packet or PPP protocol packet.

The downlink is similar to the uplink, only except that the PDCP protocol in the RGW is responsible for the compression of the header of the downlink data, and the PDCP protocol in the UE is responsible for the decompression of the header of the downlink data,

A transport process of the controlling plane signaling in the embodiment of this method is as follows.

The uplink: the RRC of the UE encapsulates a GMM or SM or SMS message or a signaling message of this layer into a data packet and passes it to the RLC or MAC of the RNL. The RLC or MAC protocol adds an RLC or MAC header and sends it to the RFL after receiving and processing the data packet. The physical layer performs coding, modulation, and other operation on the received data packet and sends it to the UTRAN via the Uu interface. The RFL of the BS+ONU or ONT in the UTRAN encapsulates the data into an Iub-C interface RNL (such as the FP) frame after receiving the data, sends it to the RRC layer of the RAN-Server through the bearer of an Iub-C interface TNL (such as the SCTP or IP or LNK or PHY).

The RNL (such as the FP or NBAP) and the TNL (such as the IP layer or signaling bearer layer (for example, the SCTP or IP)) of the Iub-C interface between the Node B and the RAN-Server may be directly borne on the OAN. A Layer 2 bridging technology (for example, the Ethernet bridging) may be employed between the Node B and the RAN-Server, that is, the OLT is a Layer 2 network element. Or, a Layer 3 routing technology (for example, the IP Layer 3 routing) is employed between the Node B and the RAN-Server, that is, the OLT is a Layer 3 network element.

The BS+ONU or ONT divides the FP or IP or NBAP or SCTP or IP packet of the Iub-C interface into ODN LNK frames suitable for the optical transmission, then performs an electro-optic conversion to have them borne on the ODN physical layer, and sends them to the OLT via an optical fiber. The OLT PHY performs an optic-electro conversion to obtain the ODN LNK frames and then converts the ODN LNK frames into the LNK frames to be sent to the RAN-Server for further processing. The RAN-Server obtains RNL frames of the Uu interface from the Iub-C interface FP and sends them to the MAC or RLC protocol of the RNL. The MAC or RLC protocol removes the protocol header in turn and sends the data to the RRC after a reassembly and combination. The RRC protocol decompresses the compressed data packet header to obtain a user packet, and then sends the data packet to a network element of the CN through the radio network layer and transport network layer processing of the Iu-C interface.

In the CN, the IGSN or SGSN or IGSN-Server or SGSN-Server performs a TNL and RNL processing of the Iu-C interface and obtains the GMM or SM or SMS message from the RANAP. Similarly, the UE receives a signaling message of the core network and an RRC signaling message of the access network through an opposite process.

The radio interface protocol stack of the system of the present invention is moved down to the BS and has the following advantages.

1. The standard Iu or Iur interface is reused as far as possible to enable a smooth evolution of the current UTRAN architecture.

2. The controlling plane and the user plane are separated to simplify the design of each entity, optimize the functions of the RNC and BS, SGSN and GGSN, so as to make them more adaptable to the access network structure employing the distributed network structure, ensure a rapid response mechanism between the network and the UE and a larger flexibility and expandability, and facilitate the networking, thus being more suitable for the development of the future services.

3. The multi-to-multi network architecture is employed to effectively avoid the single point failure.

4. The fixed, nomadic, portable, and low-speed mobile radio access applications are particularly suited for the convenience of convergence with the wired network.

The tight coupling manner provided in the system of the present invention makes the radio or mobile access technology and the OAN access technology complementary according to their characteristics to enlarge the network coverage based on the Wireless or Mobile over Fiber. The Wireless or Mobile over Fiber mainly utilizes the radio coverage to complement the OAN coverage to enable the 3G or 2G access network construction make the best use of the wire resources set by the original OAN network, thereby reducing the construction cost of the 3G or 2G access network.

The loose coupling manner provided in the system and method of the present invention shares the core network resources of the radio network and the OAN as far as possible and performs uniform authentication, accounting, and customer care.

To sum up, in view of the problem of interconnecting the 3G or 2G radio communication network and the OAN (such as a network accessed with the PON technology), the present invention provides a solution that the radio network moves the radio interface protocol stack down to the base station and then is tightly or loosely coupled to the OAM network as a wireless extension of the OAM wired access. The solution is suitable for fixed radio, nomadic, portable, and mobile access applications and provides an evolution path for the development of the radio network by the OAN network operators.

Although the above embodiments are described for illustrating the principle of the present invention, it is to be understood that, the specific embodiments of the present invention are not limited thereto. For those skilled in the art, various changes and modifications made without departing from the spirit and scope of the present invention are all within the scope of the present invention.

## Claims

1. A network interconnection system with separated controlling and bearing, having a radio access network (RAN) and a core network (CN), wherein the RAN comprises a base station (BS), a radio access network server (RAN-Server), and a radio gateway (RGW); wherein
the RAN-Server is provided with controlling plane functions of a radio network controller (RNC) comprising functions of a radio resource controlling (RRC), a cell-specific radio resource managing, and a handover controlling;
the RGW is provided with user plane functions of the RNC comprising a media access controlling, a radio link controlling, and a packet data convergencing protocol, and has a multi-to-multi connection relationship with the BS.

2. The system according to claim 1, wherein the controlling plane functions of the RAN-Server further comprise at least one of the following functions:
a multi-cell radio resource managing, a broadcast distributing, a paging controlling, an access controlling, an intra-cell controlling, an inter-cell controlling, a relocation controlling, a radio access network application part (RANAP) message forwarding or radio network subsystem application part (RNSAP) message forwarding function; or/and
the user plane functions of the RGW further comprise at least one of the following functions:
a quality of service (QoS) scheduling function and an adapting function between network elements of the CN with a new architecture and the RNC with a conventional architecture; or/and the RAN-Server or the RGW provides a broadcast or multicast controlling (BMC) function.

3. The system according to claim 1, wherein the RAN-Server is further provided with a handover controlling function between a wired access and a radio access for supporting a handover controlling between the wired access and the radio access.

4. The system according to claim I, wherein a one-to-multi or multi-to-multi connection relationship is employed between the RAN-Server and the RGW, an interface between the RAN-Server and the RGW employs Megaco of IETF or H.248 of ITU-T or a new protocol stack; and the RAN-Server manages the RGW via the Megaco or H.248.

5. The system according to claim 1, wherein the BSs are interconnected with each other, and an interface between the BSs employs an original Iur interface between the RNCs.

6. The system according to claim 1, wherein:
the BSs are interconnected with each other, and the interface between the BSs employs the original Iur interface between the RNCs; or/and
the BS is connected to a user equipment (UE) via an interface Du; an interface between the BS and the RGW employs a user plane of an original interface Iu between the RNC and an SGSN; and an interface between the BS and the RAN-Server employs a controlling plane of an original interface between the BS and the RNC; or/and
an interface between the RGW and the CN employs the user plane of the interface Iu; an interface between the RAN-Server and the CN employs a controlling plane of the interface Iu; an interface between the BS and the CN employs the user plane of the original interface Iu between the RNC and the SGSN; or/and
a controlling plane of the interface Iur is employed between the RAN-Servers; and a user plane of the interface Iur is employed between the RGWs.

7. The system according to any of claims 1 to 9, comprising a serving GPRS support node server (SGSN-Server), a serving GPRS support node gateway (SGSN-GW), a gateway GPRS support node server (GGSN-Server), and a gateway GPRS support node gateway (GGSN-GW);
the SGSN-Server is provided with controlling plane functions of a serving GPRS support node for implementing a mobility managing, a connection managing, and a session managing;
the SGSN-GW is provided with user plane functions of the serving GPRS support node;
the GGSN-Server is provided with controlling plane functions of a gateway GPRS support node; and
the GGSN-GW is provided with user plane functions of the gateway GPRS support node.

8. The system according to claim 7, wherein in the CN, an interface between the SGSN-GW and the RGW employs the user plane of the interface Iu; and an interface between the SGSN-Server and the RAN-Server employs the controlling plane of the interface Iu; or/and
an interface between the SGSN-SW and the GGSN-GW employs a user plane of an interface Gn; and an interface between the SGSN-Server and the GGSN- Server employs a controlling plane of the interface Gn; or/and
an interface between the SGSN-Server and the SGSN-GW employs the Megaco of IETF or the H.248 of ITU-T or a new protocol stack; the SGSN-Server manages the SGSN-GW via the Megaco or H.248; or/and an interface between the GGSN-Server and the GGSN-GW employs the Megaco of IETF or the H.248 of ITU-T or a brand-new protocol stack; the GGSN-Server manages the GGSN-GW via the Megaco or H.248.

9. The system according to any of claims 1 to 6, wherein a Packet Switched domain of the CN has separated controlling and bearing, and the system further comprises an integrated GPRS support node server (IGSN-Server) and an integrated GPRS support node gateway(IGSN-GW); wherein
the IGSN-Server is provided with the controlling plane functions of the serving GPRS support node and the gateway GPRS support node; and
the IGSN-GW is provided with the user plane functions of the serving GPRS support node and the gateway GPRS support node.

10. The system according to claim 9, wherein in the CN, an interface between the IGSN-GW and the RGW employs the user plane, of the interface Iu; and an interface between the IGSN-Server and the RAN-Server employs the controlling plane of the interface Iu.

11. The system according to claim 9, wherein an interface between the IGSN-Server and the IGSN-GW employs the Megaco of IETF or the H.248 of ITU-T or a brand-new protocol stack; and the IGSN-Server manages the IGSN-GW via the Megaco or H.248.

12. The system according to claim 9, wherein the RAN-Server and the IGSN-Server are integrated into one network element called a wireless server (W-Server) being provided with the original controlling plane functions of the RNC, the serving GPRS support node, and the gateway GPRS support node; and the RGW and the IGSN-GW are integrated into one network element called a wireless gateway (WGW) being provided with the original user plane functions of the RNC, the serving GPRS support node, and the gateway GPRS support node.

13. The system according to claim 12, wherein an interface between the base station and the WGW employs a user plane of an interface Iub; and an interface between the base station network element and the W-Server employs a controlling plane of the interface Iub; or/and
an interface between the W-Server and the WGW employs the Megaco of IETF or the H.248 of ITU-T or a brand-new protocol stack; and the W-Server manages the WGW via the Megaco or H.248; or/and
the controlling plane of the interface Iur is employed between the W-Servers; the user plane of the interface Iur is employed between the WGWs; and an interface between the added base station network elements employs the interface Iur.

14. A network interconnection method with separated controlling and bearing, wherein a radio network controller (RNC) is decomposed into a radio access network server (RAN-Server) and a radio gateway (RGW) to implement the separation of the controlling and the bearing; the RAN-Server has controlling plane functions of a base station controller (BSC), and the RGW has user plane functions of the BSC, the method comprising:
interconnecting a radio base station with an optical access network (OAN) at a reference point a within the OMAN via an adapting function (AF), and interconnecting the RGW or a wireless gateway (WGW) of a radio communication network with an optical line terminal (OLT) at a reference point v within the OAN, so as to implement an interconnection between the optical network and the radio communication network.

15. The method according to claim 14, wherein the base station is connected to the AF entity via a reference point T of the OAN, and the AF entity is connected to an optical network unit (ONU) or optical network terminal (ONT) in the OAN at the reference point a in the optical network, or,
the AF entity is integrated with the base station into one network element in the radio communication network, and the network element is connected and disposed in the OAN via the reference point a, and connected to the ONU or ONT in the OAN,

16. The method according to claim 14, wherein the RGW is integrated with the OLT in the OAN into one network element and is connected to a core network (CN) via a reference point Iu-D.

17. The method according to claim 14, wherein enabling a compression or decompression function comprises:
encapsulating, by a radio frequency layer (RFL) of the base station, data into a protocol frame after receiving the data, and sending it to the RGW via a corresponding interface; and directly bearing a corresponding interface framing protocol between the Node B and the RGW in the OAN.

18. The method according to claim 17, further comprising:
dividing, by the Node B, an FP or IP packet into LNK frames, and bearing them on a physical layer between the Node B and the AF to be sent to the AF;
converting, by the AF, the LNK frames into ONU LNK frames, and bearing them on a physical layer between the ONU or ONT and the AF to be sent to the ONU or ONT;
converting the ONU or ONT LNK frames into optical distribution network (ODN) LNK frames suitable for an optical transmission, performing an electro-optic conversion to have them borne on an ODN physical layer, and sending them to the OLT via an optical fiber;
performing, by the OLT physical layer, an optic-electro conversion to obtain the ODN LNK frames and then converting the ODN LNK frames into the LNK frames to be sent to the RGW; or
dividing, by the Node B, an FP or IF or NBAP or SCTP or IP packet of an Iub-C interface into LNK frames, and bearing them on a physical layer between the Node B and the AF to be sent to the AF;
converting, by the AF, the LNK frames into ONU LNK frames, and bearing them on a physical layer between the ON or ON and the AF to be sent to the ONU or ONT;
converting the ONU or ONT LNK frames into ODN LNK frames suitable for an optical transmission, performing an electro-optic conversion to have them borne on an ODN physical layer, and sending them to the OLT via an optical fiber; and performing, by the OLT physical layer, an optic-electro conversion to obtain the ODN LNK frames and then converting the ODN LNK frames into the LNK frames to be spent to the RAN-Server.

19. The method according to claim 17, wherein the Node B and the RGW are connected in a Layer 2 bridging manner; or
the Node B and the RGW are connected in a Layer 3 routing manner.

20. The method according to claim 17, further comprising compressing, by the RGW, a header of downlink data and decompressing, by a user equipment, a header of downlink data based on a PDCP protocol.

21. A network interconnection method with separated controlling and bearing, comprising:
interconnecting a base station (BS) of a radio communication network with an optical access network (OAN) at an optical distribution network (ODN) via an optical network unit (ONU) or optical network terminal (ONT), and interconnecting a radio gateway (RGW) or wireless gateway (WGW) of the radio communication network with an optical line termination (OLT) at a reference point v, so as to implement an interconnection between the optical network and the radio communication network.

22. The method according to claim 21, wherein the BS is directly connected to the ONU or ONT via a reference point a of the OAN, or,
the ONU or ONT is integrated with the BS into one network element in the radio communication network, and the network element is interconnected with the OAN at the ODN.

23. The method according to claim 21, wherein the RGW is integrated with the OLT in the OAN into one network element, and the network element is connected and communicated with a core network (CN) via a reference point Iu-D.

24. The method according to claim 23, further comprising;
dividing an FP or IP packet into ODN LNK frames suitable for an optical transmission, performing an electro-optic conversion to have them borne on an ODN physical layer, and sending them to the OLT via an optical fiber; and
performing, by an OLT physical layer, an optic-electro conversion to obtain the ODN LNK frames and then converting the ODN LNK frames into LNK frames to be sent to the RGW.

25. The method according to claim 21, further comprising: dividing, by a BS+ONU or ONT, an FP or IP or NBAP or SCTP or IP packet of an Iub-C interface into ODN LNK frames suitable for an optical transmission, performing an electro-optic conversion to have them borne on an ODN physical layer, and sending them to the OLT via an optical fiber; and performing, by the OLT physical layer an optic-electro conversion to obtain the ODN LNK frames and then converting the ODN LNK frames into LNK frames to be sent to a radio access network server (RAN-Server) for further processing.

26. The method according to claim 25, wherein the RAN-Server obtains RNL frames of a Uu interface from the Iub-C interface FP and sends them to a MAC or RLC protocol of an RNL, the MAC or RLC protocol removes a protocol header in turn and sends the data to a radio resource control (RRC) after a reassembly and combination, and the RRC protocol decompresses a compressed data packet header to obtain a user packet, and sends the data packet to a network element of the CN through a radio network layer (RNL) and transport network layer (TNL) processing of an Iu-C interface.

27. The method according to claim 21, 24, or 25, further comprising:
directly bearing a corresponding interface framing protocol between the Node B and the RGW on the OAN; and employing a Layer 2 bridging manner between the Node B and the RGW; or
directly bearing a corresponding interface framing protocol between the Node B and the RGW on the OAN; and employing a Layer 3 routing manner between the Node B and the RGW.
